# EUROPEAN PATENT APPLICATION

(11) **EP 4 807 391 A1**
(43) Date of publication of application: **16.09.2026**
(21) Application number: 24889028.7
(22) Date of filing: 30.10.2024
(51) Int. Cl.: G01S 7/481, H02J 50/10, H02K 7/14, H02K 7/08, H02K 11/01, H02K 5/10

(54) **LIDAR DEVICE AND VEHICLE**

(30) Priority: 10.11.2023 KR 20230155887
(71) Applicant: LG Innotek Co., Ltd., Seoul 07796 (KR)
(72) Inventor: PARK, Young Dae, Seoul 07796 (KR); YU, Hyun Soo, Seoul 07796 (KR); CHOI, Jin Myung, Seoul 07796 (KR)
(74) Representative: Plasseraud IP
(86) International application number: PCT/KR2024/016829
(87) International publication number: WO 2025/100840

(57) **Abstract**

A LIDAR device disclosed in an embodiment includes: a transceiver configured to transmit and receive a laser beam; a first frame having a fixed position; a second frame coupled to an inner side of the first frame and rotating together with the transceiver; a motor coupled to the first frame and the second frame, configured to rotate the second frame about an axis, and including a driving magnet; a first bearing member disposed under the motor, coupled between an inner sidewall of the second frame and an inner sidewall of the first frame, and configured to guide rotation of the second frame; and a shielding cover covering an upper portion and an outer side of the first bearing member and configured to block magnetic flux leaking from the driving magnet.

## Description

### Technical Field

The invention relates to a LIDAR device. The invention relates to a vehicle having a LIDAR device including a rotatable sensor portion and a fixed base unit.

### Background Art

An autonomous vehicle (AV) uses a plurality of sensors for situation recognition.
Sensors that are part of a self-driving system (SDS) of an autonomous vehicle may include one or more of a camera, a LIDAR (Light Detection and Ranging) device, and an inertial measurement unit (IMU). Sensors such as cameras and LIDAR are used to capture and analyze scenes surrounding a driving vehicle. Then, the captured scenes are used to detect objects including static objects such as fixed structures and dynamic objects such as pedestrians and other vehicles. Further, data collected from sensors may be used to detect conditions such as road markings, lane curvature, traffic lights, and signs. In addition, scene representations such as a three-dimensional point cloud obtained from LIDAR of the driving vehicle may be combined with one or more images obtained from a camera to obtain additional insight into a scene or situation around the driving vehicle.

In addition, a LIDAR transceiver may include a transmitter that transmits light in an ultraviolet (UV), visible light, and infrared spectrum region, and/or one or more photodetectors that convert other electromagnetic radiation into electrical signals. In order to provide high-fidelity object detection and tracking, an optical sensor such as LIDAR requires robustly fixed optical components and sufficient space for one or more transceiver assemblies, processing and driver circuits, cooling elements, cleaning elements, wiring, and motor assemblies. LIDAR may also have transceiver components rigidly fixed relative to each other in order to withstand automotive-grade vibration, high-speed rotation of a mechanical LIDAR assembly, and to address balance and weight considerations. In addition, LIDAR requires sufficient accommodation packaging and aesthetic considerations must also be taken into account.

### Disclosure

### Technical Problem

An embodiment of the invention may provide a LIDAR device having a structure for preventing penetration of moisture or foreign substances from the outside. An embodiment of the invention may provide a LIDAR device having a shielding cover for preventing moisture or foreign substances penetrating from the inside or outside from directly contacting a bearing member. An embodiment of the invention may provide a LIDAR device having a discharge outlet for discharging moisture or foreign substances penetrating from the inside or outside to the outside. An embodiment of the invention may provide a LIDAR device having a concave accommodating groove for allowing moisture or foreign substances to accumulate therein and connecting inlets of a plurality of discharge outlets to the accommodating groove. An embodiment of the invention may provide a LIDAR device having a shielding cover that covers an outer side of the bearing member to block interference of electromagnetic force with bearings of the bearing member.

### Technical Solution

A LIDAR device according to an embodiment of the invention may include: a transceiver configured to transmit and receive a laser beam; a first frame having a fixed position; a second frame coupled to an inner side of the first frame and rotating together with the transceiver; a motor coupled to the first frame and the second frame, rotating the second frame about an axis, and including a driving magnet; a first bearing member disposed under the motor, coupled between an inner sidewall of the second frame and an inner sidewall of the first frame, and configured to guide rotation of the second frame; and a shielding cover covering an upper portion and an outer side of the first bearing member and blocking magnetic flux leaking from the driving magnet.

According to an embodiment of the invention, the motor may include a yoke disposed inside an outer wall of the first frame, a plurality of driving magnets disposed inside the yoke, and a motor core facing the plurality of driving magnets and fixed to an inner sidewall of the second frame, and an upper end of the yoke may be disposed higher than a position of a gap between the outermost first frame and the second frame.

According to an embodiment of the invention, the first frame may include a plurality of discharge outlets each having an inlet disposed in an accommodating space between an inner sidewall and an outer wall of the first frame and an outlet extending to a position lower than the inlet. According to an embodiment of the invention, the accommodating space may be disposed outside the inner sidewall of the first frame in which the first bearing member is disposed.

According to an embodiment of the invention, the shielding cover may include a fixed piece covering a lower surface of the motor core, a bent piece bent from the fixed piece, and an extension piece bent from the other end of the bent piece toward an outer side of an inner sidewall of the first frame.

According to an embodiment of the invention, a lower end of the extension piece of the shielding cover may be disposed at the same level as or lower than a center of a bearing of the first bearing member. According to an embodiment of the invention, the LIDAR device may further include: a central shaft coupled to a central inner portion of the first frame; one or more second bearing members around the central shaft; and a wireless power transmission module coupled inside the first and second frames.

A LIDAR device according to an embodiment of the invention may include: a bottom cover; a first frame having a plurality of fixed sidewalls protruding in a vertical direction therein and disposed on an upper circumference of the bottom cover; a central shaft coupled to the first frame; a second frame rotating around the central shaft; a motor coupled to the first frame and the second frame and configured to rotate the second frame; a wireless power transmission module respectively coupled to the first frame and the second frame; a first bearing member coupled between the second frame and the first frame and configured to guide rotation; a second bearing member coupled between the central shaft and the second frame and configured to guide rotation; and a shielding cover disposed between the motor and the first bearing member, wherein a portion of the motor is disposed inward of a gap between the first frame and the second frame and is disposed higher than a position of the gap between the outermost first frame and the second frame.

According to an embodiment of the invention, the motor may include a yoke disposed inside an outer wall of the first frame, a plurality of driving magnets disposed inside the yoke, and a motor core facing the plurality of driving magnets and fixed to an inner sidewall of the second frame, and an upper end of the yoke may be disposed higher than a position of the gap between the first frame and the second frame.

According to an embodiment of the invention, the first frame may include a plurality of discharge outlets each having a flow path penetrating outward from an accommodating space between an inner sidewall and an outer wall of the first frame. According to an embodiment of the invention, the shielding cover may include a fixed piece covering a lower surface of the motor core, a bent piece bent from the fixed piece, and an extension piece bent from an end of the bent piece toward an outer side of an inner sidewall of the first frame. According to an embodiment of the invention, a lower end of the extension piece of the shielding cover may be disposed at a position equal to or lower than a center of a bearing of the first bearing member.

### Advantageous Effects

According to an embodiment of the invention, the LIDAR device may have a structure for preventing penetration of moisture or foreign substances from the outside. Specifically, a back yoke is disposed inward of a gap between the rotating frame and the fixed frame, and an upper end of the back yoke is positioned higher than an upper end of the gap, thereby effectively preventing the penetration of moisture or foreign substances from the outside

The LIDAR device according to the invention may block moisture and foreign substances penetrating inside from directly contacting an upper end portion of a bearing member. Specifically, by disposing a shielding cover between the bearing member and the motor and extending the shielding cover further outward than an outer side of the bearing member, the shielding cover may prevent penetration of moisture or foreign substances into a region of the bearing member. Further, by extending the shielding cover to an outer lower end of the bearing member, the shielding cover may block an influence of electromagnetic force generated by the motor on bearings of the bearing member.

The LIDAR device according to the invention may include a plurality of discharge outlets for discharging moisture or foreign substances penetrating into a fixed frame to the outside, thereby preventing accumulation of moisture or foreign substances inside.

The LIDAR device according to the invention may allow discharge of moisture or foreign substances to be facilitated by disposing an outlet of each discharge outlet of the fixed frame lower than an inlet thereof. Further, a portion where the inlets of the discharge outlets of the fixed frame are connected may include a concave accommodating groove so that moisture or foreign substances may accumulate therein while facilitating discharge. Accordingly, performance degradation of the LIDAR device may be prevented, operational reliability may be improved, and lifetime may be extended.

### Description of Drawings

FIG. 1 is a perspective view of a vehicle having a LIDAR system according to an embodiment of the invention.
FIG. 2 is an example of a block diagram of a vehicle system having the LIDAR system of FIG. 1.
FIG. 3 is a perspective view of a LIDAR device according to an embodiment of the invention.
FIG. 4 is a perspective view of the LIDAR device of FIG. 3 viewed from another direction.
FIG. 5 is an example of a side cross-sectional view of the LIDAR device of FIG. 3.
FIG. 6 is an example of a side cross-sectional view of the LIDAR device of FIG. 3 viewed from another direction.
FIG. 7 is a partially enlarged view of FIG. 6.
FIG. 8 is an exploded perspective view illustrating a first frame, a second frame, and a shielding cover in the LIDAR device of the invention.
FIG. 9 is a perspective view illustrating a bearing member and a discharge outlet disposed inside the first frame of FIG. 8.

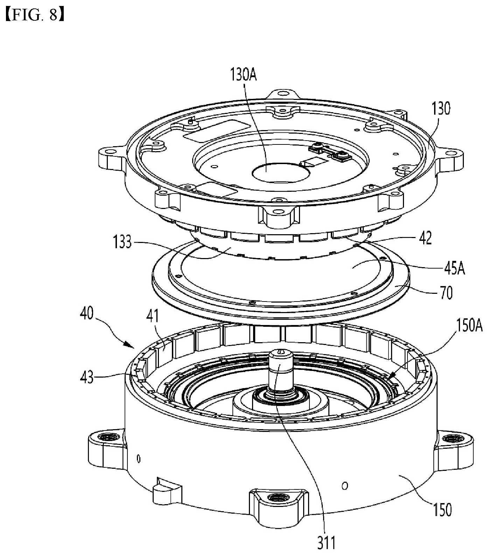

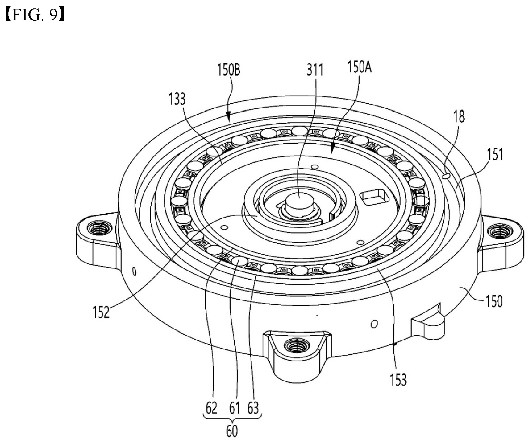

FIG. 9 is a perspective view illustrating an interior of the first frame of FIG. 8.

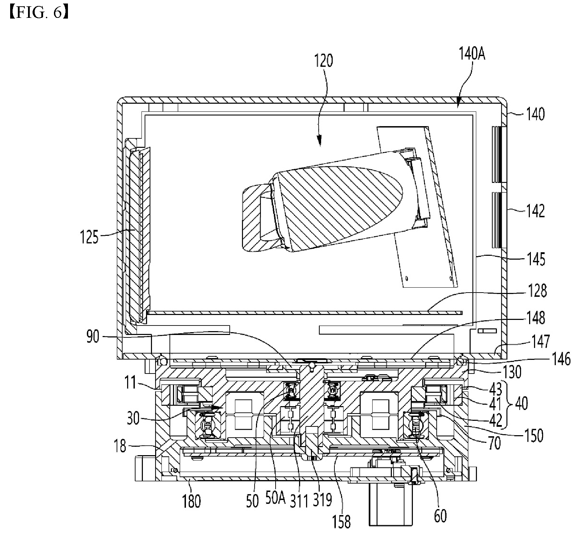

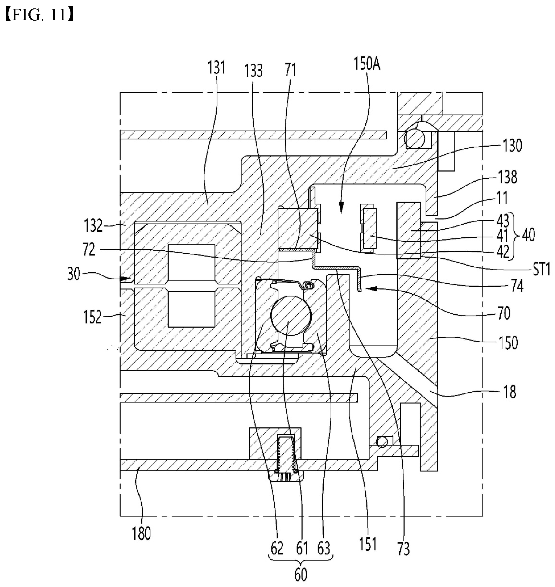

FIG. 11 is an example of a front view of FIG. 6.

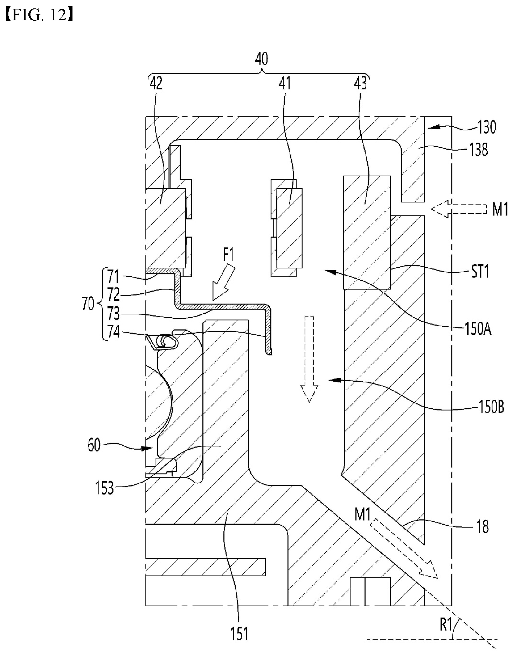

FIG. 12 is a view for explaining an internal flow path in FIG. 11.

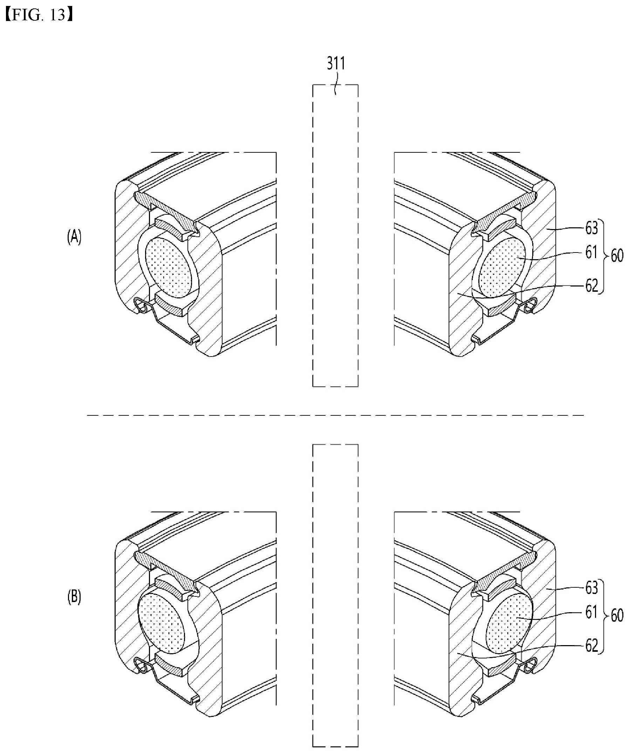

FIGS. 13A and 13B are views comparing a state of a bearing of a bearing member before and after magnetization by electromagnetic force in the LIDAR device of the invention.

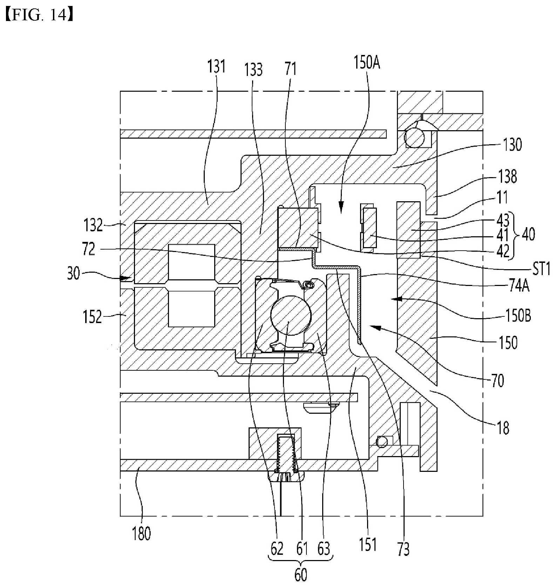

FIG. 14 is a modified example of the shielding cover of FIG. 11.

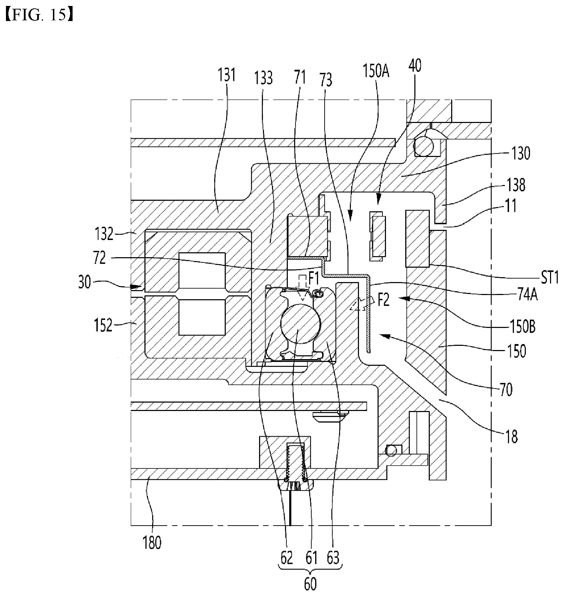

FIG. 15 is a view illustrating an example of blocking electromagnetic force transmitted to a bearing member by the shielding cover of FIG. 14.

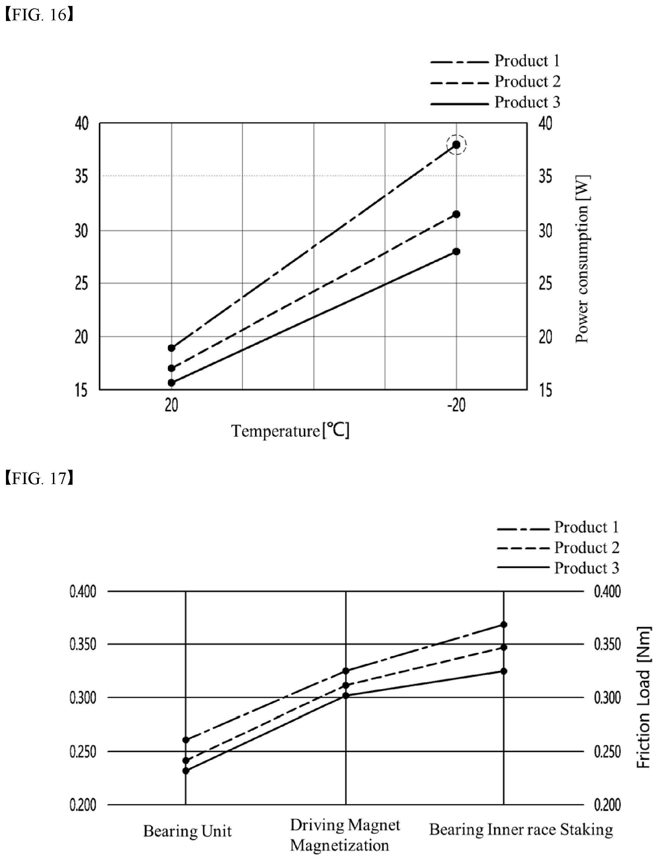

FIG. 16 is a graph comparing power consumption according to temperature for products of the LIDAR device.
FIG. 17 is a graph comparing friction load according to a bearing alone, magnetization of a driving magnet, and staking of an inner ring of a bearing in products of the LIDAR device.

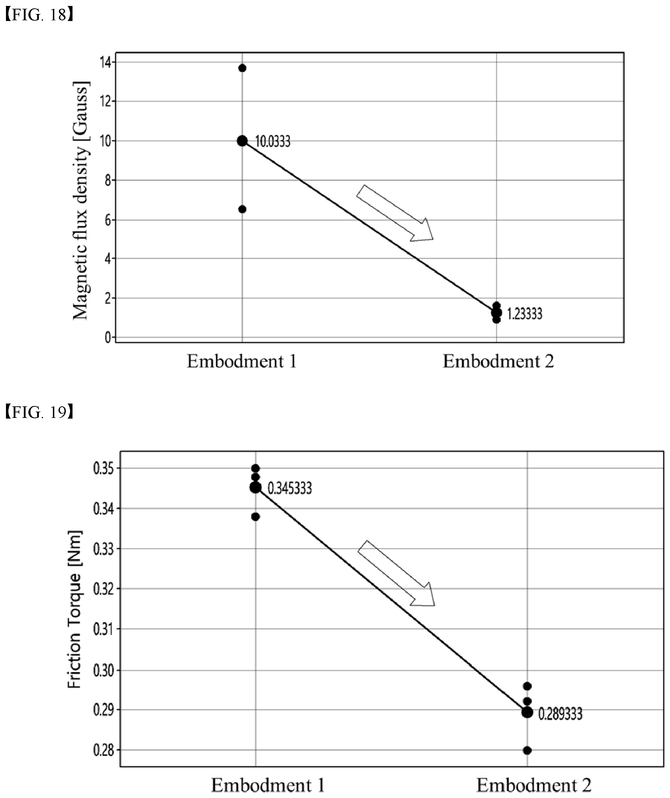

FIG. 18 is a graph comparing leakage magnetic flux affecting a bearing member according to Embodiments 1 and 2 of the invention.
FIG. 19 is a graph comparing friction torque in a bearing member according to Embodiments 1 and 2 of the invention.

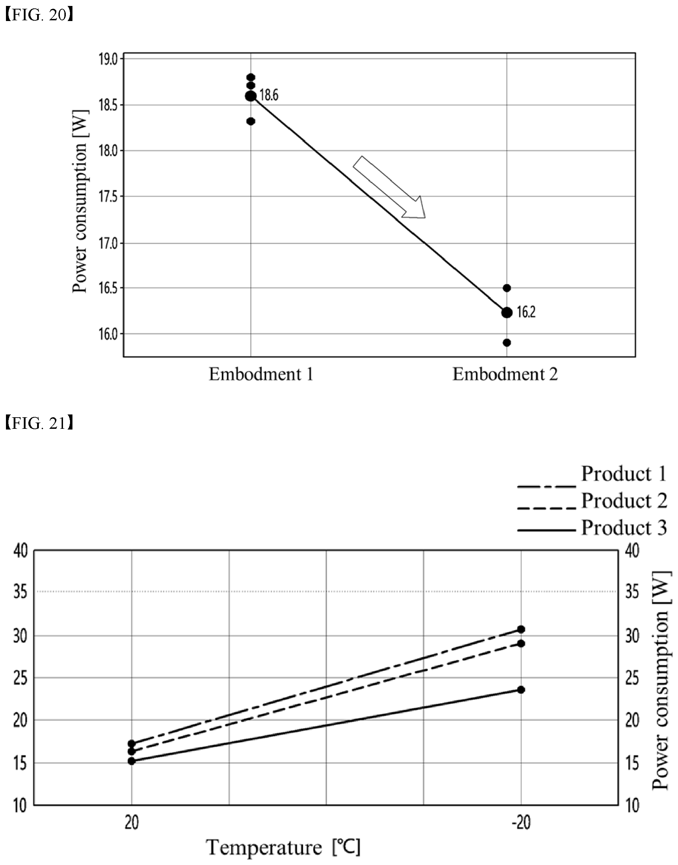

FIG. 20 is a graph comparing power consumption in a bearing member according to Embodiments 1 and 2 of the invention.
FIG. 21 is a graph comparing power consumption according to temperature in products of the LIDAR device of the invention.

### Best Mode

Hereinafter, embodiments will be described in detail with reference to the accompanying drawings in which like reference numerals refer to like elements. However, the invention may be implemented in various different forms and is not limited to the embodiments described herein. Rather, these embodiments are provided so that this disclosure will be thorough and complete, and will fully convey the features and aspects of the invention to those skilled in the art. Accordingly, processes, elements, and techniques that are not necessary for those skilled in the art to fully understand the features and aspects of the invention may not be described. Unless otherwise stated, like reference numerals denote like elements throughout the accompanying drawings and written description, and thus repeated descriptions thereof will be omitted.

A LIDAR system may be referred to as a depth detection system, a laser distance measuring system, a laser radar system, a LIDAR system, or a laser/optical detection and distance measuring (LADAR) system. LIDAR is a type of distance measuring sensor characterized by a long detection distance, high resolution, and low interference from the environment. LIDAR has been widely applied in fields such as intelligent robots, unmanned aerial vehicles, autonomous driving, or self-driving. An operating principle of LIDAR is to estimate a distance based on a round-trip time of electromagnetic waves between a source and a target (e.g., time-of-flight or delay time). The LIDAR system measures a distance to an object (e.g., depth) by emitting an optical pulse (e.g., a laser pulse) toward the object and measuring a time taken for the optical pulse to be reflected from the object and detected by a sensor of the LIDAR system.

The above-described aspects and features of embodiments of the invention will be described in more detail with reference to the drawings.

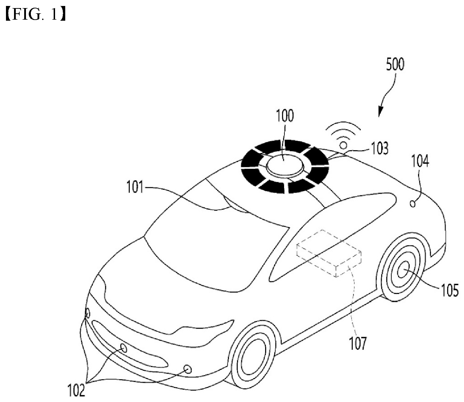

FIG. 1 is a perspective view of a vehicle having a LIDAR system according to an embodiment of the invention.

Referring to FIG. 1, a moving body such as a vehicle 500 may include a LIDAR system 100, a camera portion 101, vehicle recognition sensors 102, 104, a GPS sensor 103, a vehicle control module 107, and an ultrasonic sensor 105. The LIDAR system 100 is a device having a rotating sensor portion, is coupled to a portion of the vehicle 500, rotates 360 degrees, senses a distance between the vehicle and objects including static objects and dynamic objects, senses a surrounding environment and shape, and controls driving using measured data. A three-dimensional point cloud based on such sensing technology may collect and analyze surrounding objects or environments of the vehicle and may generate sensing data providing information about objects located within an appropriate proximity range.

The LIDAR system 100 may communicate with the vehicle control module 107 and may transmit and receive information related to driving of the vehicle. The vehicle control module 107 may communicate with various systems or sensors inside the vehicle and may perform various control operations. The vehicle control module 107 is a device for controlling and monitoring various systems of the vehicle and may include a control device such as an electronic control unit (ECU). The vehicle control module 107 may communicate with an external mobile device and may be electrically connected to a detachable storage device.

The camera portion 101 may be mounted inside and/or outside the vehicle in one or more numbers, may capture images of a front and/or rear of the moving vehicle, and may provide or store the images through a display device not shown. The captured image data may optionally include audio data. In another example, the camera portion 101 may be mounted at a front, rear, corners, or sides of the vehicle 500 to capture surrounding images and provide them through a display device. The vehicle control module 107 or another processor may identify traffic lights, vehicles, pedestrians, and the like based on the captured data and provide obtained information to a driver. The camera portion 101 may be used as a driver assistance device.

Front radars 102 may be installed in plurality at a front of the vehicle 500 and may detect a distance between the vehicle 500 and a front object. Rear radars 104 may be installed in plurality at a rear of the vehicle 500 and may detect a distance between the vehicle 500 and a rear object. When object information is detected through the radars 102 and 104, surrounding objects or obstacles may be detected and notified to a driver through an alarm or warning message.

The GPS sensor 103 may receive signals from satellites and provide the signals to devices such as the vehicle control module 107, the LIDAR system 100, and the camera portion 101. The devices may provide or calculate information such as a position, speed, and time of the vehicle based on GPS signals. The ultrasonic sensor 105 may sense a distance to a nearby vehicle or obstacle to provide convenience for safe parking. The ultrasonic sensor 105 may prevent accidents during driving. The ultrasonic sensor 105 may be installed at a rear, side, or wheels of the vehicle.

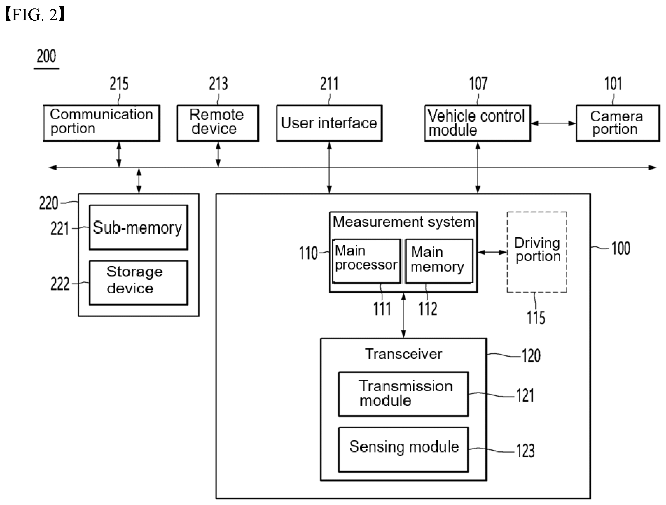

As shown in FIG. 2, a vehicle system 200 having the LIDAR system 100 and the vehicle control module 107 may receive input from a user or driver or provide information through a user interface 211. The user interface 211 may include a display device, a touch panel, buttons, voice recognition, and wired or wireless input devices and may be connected via wired or wireless communication to enable communication between the driver and various devices. The vehicle system 200 may communicate with a remote device 213, and the remote device 213 may communicate remotely with a user or an external system or receive an external control signal. A Communication portion 215 may support wired or wireless communication and may be a wired or wireless module. A storage unit 220 may include one or more sub-memories 221. The storage unit 220 may include a portable or detachable storage device 222. The LIDAR system 100 may communicate with the user interface 211 and the camera portion 101.

The LIDAR system 100 may include a driving portion 115 such as a motor, and the driving portion 115 may rotate part or all of the LIDAR system 100 by 360 degrees according to a control signal. The driving portion 115 includes a portion fixed to a moving body such as a vehicle and a portion rotating together with a sensor device and communicates with internal components such as a measurement system 110 to enable axial rotation. The LIDAR system 100 may include the measurement system 110 and at least one transceiver 120. The driving portion 115 may be coupled such that the measurement system 110 and the transceiver 120 rotate and may transmit driving force.

The measurement system 110 may include a main processor 111 and a main memory 112, and the main processor 111 may be implemented as a general-purpose processor, an ASIC (Application Specific Integrated Circuit), one or more FPGAs (Field Programmable Gate Arrays), a group of processing components, or other suitable electronic processing components. The main memory (e.g., memory, memory unit, storage device, etc.) 112 may include one or more devices (e.g., RAM, ROM, flash memory, hard disk storage, etc.) for storing data and/or computer code for completing or facilitating various processes described in the invention. The main memory 112 may be a volatile memory or a non-volatile memory, or may include the same. The main memory 112 may include database components, object code components, script components, or any other type of information structure to support various activities and information structures described in the invention. According to an embodiment, the main memory 112 may be communicatively connected to the main processor 111.

The measurement system 110 may include one or more processors (also referred to as central processing units (CPUs)). The one or more processors may be connected to a communication infrastructure or a bus. Further, each of the one or more processors may be a graphics processing unit (GPU). In some examples, the GPU may include a processor that is a specialized electronic circuit designed to process mathematically intensive applications. The GPU may have a parallel structure efficient for parallel processing of large data blocks such as mathematically intensive data commonly used in computer graphics applications, images, and videos. The measurement system 110, as a computer system, may be connected to one or more user input/output devices such as a monitor, a keyboard, and a pointing device that communicate with the communication infrastructure through a user input/output interface.

Within the LIDAR system 100, one or more transceivers 120 may be disposed. When a plurality of transceivers is disposed, laser beams may be emitted and sensed in different directions with respect to a rotation axis. Here, the different directions may be within a range of 10 degrees to 180 degrees relative to each other, for example, arranged at any one of 30 degrees, 60 degrees, 90 degrees, 120 degrees, 150 degrees, and 180 degrees, and preferably arranged at an angle of 180 degrees. The plurality of transceivers may have different divergence angles or fields of view. The plurality of transceivers may scan objects at different elevations.

The transceiver 120 includes a transmission module 121 and a sensing module 123, the transmission module 121 transmits a laser beam, and the sensing module 123 senses the laser beam transmitted by the transmission module 121. The transmission module 121 may include a light source array (not shown), and the sensing module 123 may include a receiving optical system (not shown) and a sensor array (not shown). The transmission module 121 may include a processor or control module such as a general-purpose processor, ASIC, or FPGA capable of controlling driving of the light source array and output of optical signals, and may further include an internal memory storing code for controlling generation of laser beams.

A light source array may include a plurality of light sources that generate laser beams or optical pulses. The light sources may include LD (laser diode), edge emitting laser, VCSEL (vertical cavity surface emitting laser), distributed feedback laser, LED (light emitting diode), SLD (super luminescent diode), and the like. However, the present disclosure is not limited thereto. The sensing module 123 may convert a raw histogram based on signals sensed through a receiving optical system, and may include a processor having a matched filter, a peak detection circuit, and SPAD saturation and quenching circuits. Such a processor may be implemented as a general-purpose processor, ASIC (Application Specific Integrated Circuit), one or more FPGA (Field Programmable Gate Array), a group of processing components, or other suitable electronic processing components. The sensing module 123 may include a memory not shown having one or more devices for storing detected optical signals, for example RAM, ROM, flash memory, hard disk storage, and the like.

Hereinafter, a LIDAR device having a LIDAR system will be described with reference to the drawings.

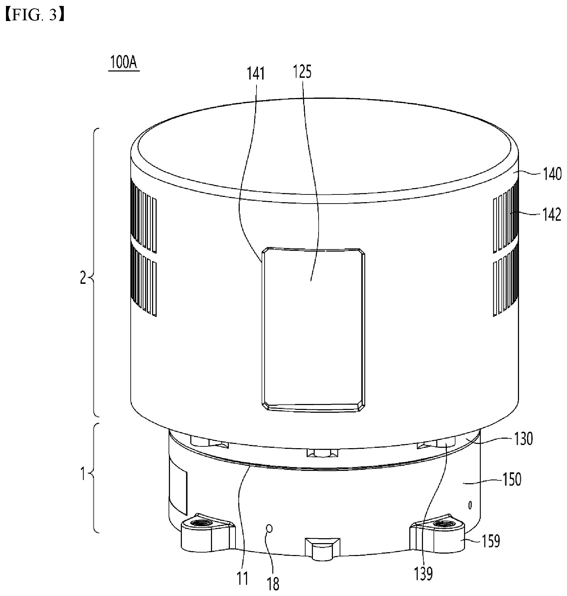

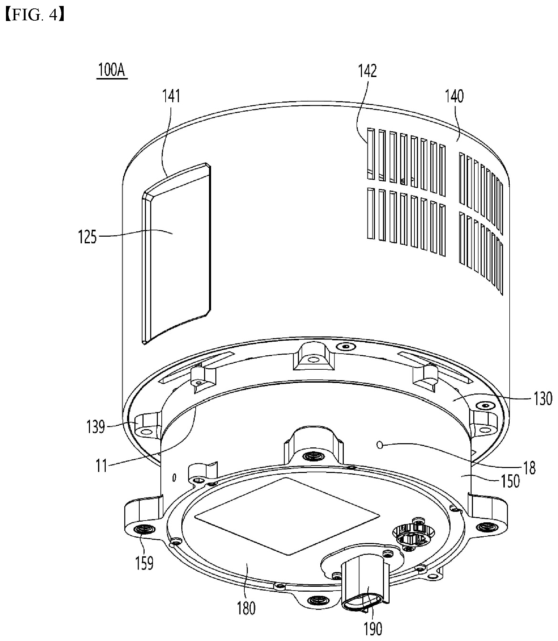

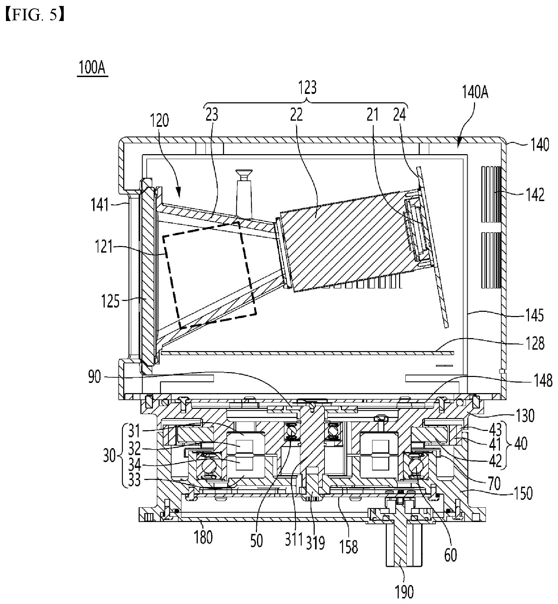

As shown in FIGS. 3 to 5, a LIDAR device 100A may include a fixed portion 1 and a rotating portion 2 having a cover 140. The fixed portion 1 is coupled to a part of a movable body such as a vehicle, and may be embedded in the movable body or may protrude from the movable body. The fixed portion 1 may include a bottom cover 180, a first substrate 158, and a first frame 150. The first frame 150 and the bottom cover 180 may be separated from each other or integrally formed, and the first frame 150 may have a plurality of fastening portions 159 and may be fastened to the movable body by fastening means such as screws.

The rotating portion 2 may be rotated on the movable body by a driving force of a motor 40. The rotation of the rotating portion 2 may be axial rotation. The rotating portion 2 may include the transceiver 120, a rotatable second frame 130, and a second substrate 148. The transceiver 120 may rotate together with the second frame 130. The second substrate 148 is electrically connected to the transceiver 120 and may receive wireless power from the fixed portion 1. The rotating portion 2 and the fixed portion 1 may include wireless transmitting and receiving portions and may transmit and receive wireless data. The second substrate 148 may be disposed on the second frame 130 and may be disposed below the transceiver 120.

A lower portion of the cover 140 is disposed around an upper circumference of the fixed portion 1 and covers an upper circumference of the rotating portion 2. The cover 140 has a cylindrical shape with a lower portion open and includes the transceiver 120 therein, and rotates together with the rotating portion 2. The cover 140 is formed of an opaque material and includes a metal or non-metal material, covers a circumference of the transceiver 120, and may include an opening 141 for transmission and reception of laser beams. The opening 141 may be disposed on a transmission and reception path of the transceiver 120. The cover 140 may be coupled to the second frame 130 and may rotate together with the second frame 130. As another example, when the cover 140 is made of a transparent material and is coupled to the first frame 150, the cover 140 may not rotate, and the transceiver 120 may rotate together with the second frame 130.

The transceiver 120 includes a transmission module 121 and a sensing module 123, and the transmission module 121 may be disposed on one side of the sensing module 123 or one side of a window 125. The transmission module 121 has a light source array and may be disposed in a region adjacent to the window 125 in order to minimize loss or interference of laser beams.

The sensing module 123 includes a sensor portion 21, a sensor substrate 24, an optical system 22, and a light guide portion 23, and the light guide portion 23 may guide an incident laser beam to the optical system 22, and an incident side diameter may be larger than an emission side diameter. That is, the light guide portion 23 may have a funnel shape in which an inlet is wide and an outlet is narrow, and may be in close contact with the window 125. The optical system 22 has one or a plurality of lenses and focuses the laser beam incident through the light guide portion 23 onto the sensor portion 21 by adjusting resolution and refractive power, and the sensor portion 21 converts the incident laser beam into an electrical signal. The sensor substrate 24 is electrically connected to the sensor portion 21 and transmits a received signal to a processor and a memory in the fixed portion 1 through a third substrate 128 and the second substrate 148.

The light guide portion 23 may be provided in an inclined structure together with an optical axis of lenses of the optical system 22. The transceiver 120 provides one pair of the transmission module 121 and the sensing module 123, however, a plurality of transmission modules and a plurality of sensing modules having different fields of view and transmitting and receiving laser beams in opposite directions may be included.

The cover 140 includes a heat dissipation portion 142 having a plurality of holes penetrating from an inside to an outside, and the heat dissipation portion 142 may dissipate heat generated inside to the outside. The heat dissipation portion 142 may be disposed on a plurality of heat dissipation regions along an outer circumference of the cover 140, and a plurality of holes may be arranged in each heat dissipation region. For example, the plurality of heat dissipation regions may be disposed respectively at an outer side of a light source portion 121 of the transceiver 120 and at an outer side of the sensor portion 21 and the sensor substrate 24. The window 125 is exposed at the opening 141 of the cover 140, and the window 125 may be disposed on a transmission and reception region of the transceiver 120 and may transmit laser beams to be transmitted and received. The window 125 may be formed of a transparent material.

A protective cover 145 is provided in an internal region 140A of the cover 140, and the protective cover 145 may block penetration or inflow of moisture or foreign substances into an inside of the protective cover 145 when the moisture or foreign substances penetrate from an outside of the cover 140 to the inside. Accordingly, the protective cover 145 may protect the transceiver 120 and internal substrates 128 and 148. The cover 140 and the protective cover 145 may be fastened to the second frame 130 by fastening means. The protective cover 145 may have a shape corresponding to an internal shape of the cover 140, for example, a cylindrical shape in which an upper portion is closed and a lower portion is open. The window 125 may be coupled to one side of the protective cover 145.

At least one or both of the cover 140 and the protective cover 145145 may be fastened to the second frame 130 by fastening means not shown. A cover fastening portion 139 is provided at an outer circumference of the second frame 130, and the cover fastening portion 139 may be coupled to a sub frame 147 through fastening means not shown. The sub frame 147 supports an outer lower portion of the cover 140.

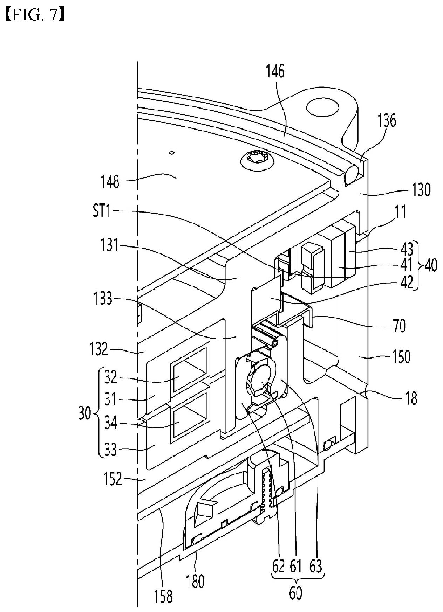

Further, the cover 140 and the protective cover 145 may be coupled to the second frame 130 through the sub frame 147. As shown in FIG. 7, an outer upper circumference 136 of the second frame 130 has a concave ring-shaped groove, and a ring-shaped gasket 146 is coupled to the ring-shaped groove, and the gasket 146 may be in close contact with the second frame 130 and the protective cover 145 or the sub frame 147.

A connector 190 may be coupled to a portion of the bottom cover 180. As another example, a power connector 190 may be coupled to a portion of the first frame 150. The connector 190 is connected to the first substrate 158 or another substrate, and may provide required power or transmit and receive data.

An outer circumference of the first frame 150 has a cylindrical shape, and an outer circumference of the second frame 130 may have a cylindrical shape. An outer diameter of the first frame 150 and an outer diameter of the second frame 130 may be the same, or the outer diameter of the second frame 130 may be larger than the outer diameter of the first frame 150. Here, the outer diameter is an outer circumference of regions where the first frame 150 and the second frame 130 correspond to each other. A region between the first frame 150 and the second frame 130 may have a gap 11. The gap 11 may be formed along a circumference between the first frame 150 and the second frame 130, and may be 1 mm or less. Since the gap 11 exists between the fixed first frame 150 and the rotating second frame 130, moisture or foreign substances may penetrate from an outside to an inside of the first frame 150 and the second frame 130 through the gap 11.

A portion of the motor 40 may be disposed inward of the gap 11. A portion of the motor 40 may be in close contact inside a region between the first frame 150 and the second frame 130. The portion of the motor 40 is located inward of the gap 11 and may block a path through which moisture or foreign substances penetrate from the outside to the inside. Further, the portion of the motor 40 may be disposed higher than a position of an upper end of the gap 11 to increase an inflow path and suppress inflow of moisture or foreign substances. The portion of the motor 40 disposed inward of the gap 11 may be a yoke or a motor core.

A coupling region of the first frame 150 and the second frame 130 of the LIDAR device includes a first substrate 158 disposed on the bottom cover 180 and a center shaft 311. A wireless power transmission module 30, bearing members 50 and 60, and a motor 40 coupled to the first frame 150 and the second frame 130 may be included.

The center shaft 311 supports rotation of the second frame 130 at a central portion of the first frame 150 together with the first substrate 158. A lower portion of the center shaft 311 may be fastened to a portion of the first frame 150 by a fastening means 319. An upper portion of the center shaft 311 may contact or be electrically connected to a component of the second substrate 148. An encoder module 90 is coupled to an upper circumference of the center shaft 311 and the second substrate 148, and the encoder module may detect a rotation direction and a position by using an encoder disk and an optical sensor.

The wireless power transmission module 30 may include first and second ferrite cores 31 and 33 and first and second coils 32 and 34. The motor 40 may include a plurality of driving magnets 41, a motor core 42, and a yoke 43. The wireless power transmission module 30 transmits power wirelessly from the fixed portion 1 to the rotating portion 2. The wireless power transmission module 30 is coupled inside the first frame 150 and the second frame 130 and may face each other. The first ferrite core 31 and the first coil 32 function as a wireless power receiving portion, and the second ferrite core 33 and the second coil 34 function as a wireless power transmitting portion. The wireless power transmitting portion 33 and 34 transmits power wirelessly within the fixed portion 1, and the wireless power receiving portion 31 and 32 receives power wirelessly within the rotating portion 2 and supplies power to components within the rotating portion 2. The wireless power transmission module 30 may enable operation of the transceiver 120 and substrates and systems connected thereto. When the motor core 42 rotates, the wireless power transmission module 30 may supply power to the motor core 42.

The wireless power transmitting portion 33 and 34 is coupled within the first frame 150, and the wireless power receiving portion 31 and 32 may be coupled to the second frame 130. The wireless power transmission module 30 is disposed at an inner circumference among regions of the first frame 150 and the second frame 130 and transmits and receives power wirelessly, and may reduce electrical influence on other components such as the motor.

The LIDAR device 100A includes a motor 40 therein for rotation of the rotating portion 2. The motor 40 includes driving magnets having electromagnetic force. The yoke 43 of the motor 40 is disposed along an outer side of the plurality of magnets 41 and shields electromagnetic force. The yoke 43 functions as a back yoke. The yoke 43 and the plurality of magnets 41 are arranged in a circumferential direction, and the motor core 42 faces the plurality of magnets 41, and when power is supplied to a coil of the motor core 42, electromagnetic force is generated between the magnets 41 and the motor core 42. The motor core 42 may rotate together with the second frame 130, and the yoke 43 and the plurality of magnets 41 may be fixed together with the first frame 150. As another example, the yoke 43 and the plurality of magnets 41 may be coupled to the second frame 130 and rotate, and the motor core 42 may be coupled to the first frame 150 and be fixed in position.

The first frame 150 is a fixed frame having a fixed position, and includes a metal material or a non-metal material, for example, the metal material may include aluminum or an alloy thereof, and the non-metal material may include a plastic material. As shown in FIG. 8, an inner portion of an outer wall of the first frame 150 includes an accommodating region 150A for insertion of components, and the second frame 130 may be seated at an inner upper portion. Further, the second frame 130 includes an accommodating space at a lower portion and corresponds to the accommodating region 150A, and may enable accommodation of components.

As shown in FIG. 7, the first frame 150 includes an extension portion 151 extending from an outer wall toward the center shaft 311, a first fixed side wall 152 protruding from the extension portion 151 toward the second substrate 148, and a second fixed side wall 153. The second frame 130 includes a first rotating side wall 132 and a second rotating side wall 133 extending from a top plate 131 toward the bottom cover 180. The first fixed side wall 152 faces the first rotating side wall 132 in a vertical direction, and the second fixed side wall 153 faces a lower portion of the second rotating side wall 133 in a horizontal direction.

The first fixed side wall 152 and the second fixed side wall 153 have a ring shape, and the first rotating side wall 132 and the second rotating side wall 133 may have a ring shape.

The wireless power receiving portion 31 and 32 is accommodated in a space between the first rotating side wall 132 and the second rotating side wall 133, and may be fixed to an outer circumference of the first rotating side wall 132 and a lower surface of the top plate 131. The wireless power transmitting portion 33 and 34 is accommodated in a space between the first fixed side wall 152 and the second rotating side wall 133, and may be fixed to an outer circumference of the first fixed side wall 152 and an upper surface of the extension portion 151.

The motor core 42 may be fixed to an inner circumference of the second rotating side wall 133 and a lower surface of the top plate 131, and the yoke 43 may be fixed on a stepped structure ST1 at an inner upper portion of an outer wall of the first frame 150. A plurality of magnets 41 may be attached to an inner surface of the yoke 43 and may be arranged in a circumferential direction. The magnets 41 may face the motor core 42. An outer side of the yoke 43 may overlap the gap 11 in a horizontal direction. An upper end of the yoke 43 is disposed higher than a position of an upper end of the gap 11, thereby suppressing inflow of moisture or foreign substances from the outside.

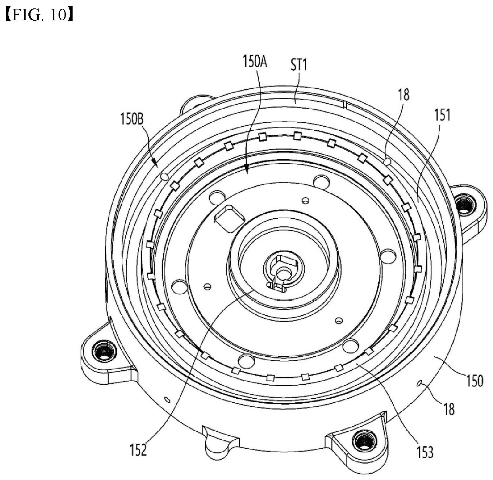

As shown in FIGS. 7 to 11, the first frame 150 may include a discharge outlet 18. The discharge outlets 18 are disposed in plurality along an outer circumference of the first frame 150, and may be spaced apart from each other or may be arranged at equal angles with respect to a central axis. An outlet of the discharge outlet 18 may be disposed lower than an inlet. The inlet of each discharge outlet 18 may be located at a corner portion between the extension portion 151 and the outer wall of the first frame 150 or at a bottom of an outer accommodating space 150B of the first frame 150. The outlet of each discharge outlet 18 may be located at a lower portion of an outer surface of the first frame 150. As shown in FIG. 12, an extension line of the discharge outlet 18 may have an acute angle R1 with respect to a horizontal straight line, thereby facilitating discharge of internal moisture or foreign substances M1. A bottom of the outer accommodating space 150B in which the inlets of the discharge outlets 18 are disposed may be horizontal or inclined, and in the inclined structure, an outer side of the bottom may be lower than an inner side of the bottom of the outer accommodating space 150B.

As shown in FIGS. 11 and 12, a shielding cover 70 may be disposed below the motor 40. The shielding cover 70 may be disposed at an outer side of the second rotating side wall 133 of the second frame 130. The shielding cover 70 may be disposed in a region between the motor 40 and the first bearing member 60. The first bearing member 60 may be disposed at one side or a lower portion of the motor 40. A portion of the shielding cover 70 is disposed adjacent to the motor core 42, thereby blocking influence of electromagnetic force F1. The shielding cover 70 may include a fixed piece 71, bent pieces 72 and 73, and an extension piece 74. The fixed piece 71 is adhered or attached to a lower surface of the motor core 42 and covers an entire lower surface of the motor core 42, and the bent pieces 72 and 73 are bent one or more times or multi stage bent from the fixed piece 71, and the extension piece 74 is bent from another end of the bent piece 73 and extends to an outer side of the second fixed side wall 153 of the first frame 150. The shielding cover 70 includes a metal material, for example, an alloy of nickel and iron, for example Permalloy, and may include a magnetic material having very high permeability and low magnetic hysteresis loss. The alloy may have a nickel content higher than an iron content.

Electromagnetic force generated by the motor 40, that is leakage magnetic flux F1, may position a bearing of the first bearing member 60 in an abnormal direction, and accordingly friction force in the first bearing member 60 increases, and accordingly power consumption may increase. In the LIDAR device, power consumption of a motor having an optical load is generated from friction generated between a bearing and a race ring, that is an inner race and an outer race, during rotation, and such friction may cause power consumption to increase rapidly in a low temperature environment.

In FIG. 13, A illustrates a state of a bearing of the first bearing member positioned at both sides of the center shaft 311 before magnetization of a driving magnet, and B illustrates a position of the bearing after magnetization. Since the bearing and the inner race and the outer race of the first bearing member are made of a magnetic material, when leakage magnetic flux F1 acts on the bearing, due to a gap between the bearing 61 and the outer race 63, a problem may occur in which the bearing 61 is brought into close contact with or contacts the outer race 63. Accordingly, a friction load of bearings of the first bearing member 60 increases, and power consumption also increases.

As shown in FIG. 16, power consumption according to temperature for products 1, 2, and 3 of LIDAR devices differs depending on products, but increases as temperature decreases, and it may be seen that there exists product 1 exceeding rated power consumption of the motor, for example max 35 W. As shown in FIG. 17, when measuring friction load for products 1, 2, and 3, it may be seen that an average friction force is lowest when a bearing is a single unit, next highest when friction is caused by magnetization of a driving magnet, and highest when an inner race of a bearing member is staked. Such friction load may be a cause of increase in power consumption. Further, since friction load increases after magnetization of a driving motor, power consumption increases due to friction caused by the bearing.

As shown in FIGS. 14 and 15, in an embodiment, the shielding cover 70 may extend an extension piece 74A to a lower portion of the first bearing member 60. A lower end of the extension piece 74A of the shielding cover 70 may extend to a position equal to or lower than a center of the bearing 61 of the first bearing member 60. Preferably, the lower end of the extension piece 74A of the shielding cover 70 may extend to a position equal to or lower than a lower end of the bearing 61 of the first bearing member 60. The extension piece 74A of the shielding cover 70 faces an outer surface of the second fixed side wall 153 along an outer circumference of the second fixed side wall 153 and may extend to a region adjacent to a lower end of the second fixed side wall 153.

The shielding cover 70 may cover both an upper portion and an outer portion of the first bearing member 60 when leakage magnetic flux F1 and F2 of the motor 40 is generated. Accordingly, a problem in which the bearing 61 of the first bearing member 60 is brought into close contact with or frictionally contacts the outer race 63 may be eliminated. The first bearing member 60 is affected by inertial load and may exclude influence of leakage magnetic flux.

Here, a configuration of FIGS. 11 and 12 may be classified as embodiment 1, and a configuration of FIGS. 14 and 15 may be classified as embodiment 2. As shown in FIG. 18, embodiment 2 shows a leakage magnetic flux measurement value reduced by 80 percent or more at room temperature compared to embodiment 1, and as shown in FIG. 19, embodiment 2 shows a friction rotation torque reduced by 13 percent or more compared to embodiment 1, and as shown in FIG. 20, embodiment 2 shows power consumption reduced by 10 percent or more compared to embodiment 1. Further, as shown in FIG. 21, it may be seen that products 1, 2, and 3 of embodiment 2 all satisfy rated power consumption and maximum power consumption of the motor according to temperature.

Features, structures, effects, etc. described in the embodiments above are included in at least one embodiment of the invention, and are not necessarily limited to only one embodiment. Furthermore, the features, structures, and effects illustrated in each embodiment may be combined or modified with respect to other embodiments by those skilled in the art in the field to which the embodiments belong. Therefore, contents related to these combinations and variations should be construed as being included in the scope of the invention. In addition, although described based on the embodiments, this is only an example, this invention is not limited, and it will be apparent to those skilled in the art that various modifications and applications not illustrated above are possible without departing from the essential characteristics of this embodiment. For example, each component specifically shown in the embodiment may be modified and implemented. And differences related to these modifications and applications should be construed as being included in the scope of the invention as defined in the appended claims.

## Claims

1. A LIDAR device comprising:
a transceiver configured to transmit and receive a laser beam;
a first frame having a fixed position;
a second frame coupled to an inner side of the first frame and rotating together with the transceiver;
a motor coupled to the first frame and the second frame, configured to rotate the second frame about an axis, and including a driving magnet;
a first bearing member disposed under the motor, coupled between an inner sidewall of the second frame and an inner sidewall of the first frame, and configured to guide rotation of the second frame; and
a shielding cover covering an upper portion and an outer side of the first bearing member and configured to block magnetic flux leaking from the driving magnet.

2. The LIDAR device of claim 1,
wherein the motor includes a yoke disposed inside an outer wall of the first frame, a plurality of driving magnets disposed inside the yoke, and a motor core facing the plurality of driving magnets and fixed to an inner sidewall of the second frame, and
wherein an upper end of the yoke is disposed higher than a position of a gap between an outermost first frame and the second frame.

3. The LIDAR device of claim 2,
wherein the first frame includes a plurality of discharge outlets each having an inlet disposed in an accommodating space between an inner sidewall and an outer wall of the first frame and an outlet extending to a position lower than the inlet.

4. The LIDAR device of claim 3,
wherein the accommodating space is disposed outside the inner sidewall of the first frame in which the first bearing member is disposed.

5. The LIDAR device according to any one of claims 2 to 4,
wherein the shielding cover includes a fixed piece covering a lower surface of the motor core, a bent piece bent from the fixed piece, and an extension piece bent from an end of the bent piece toward an outer side of an inner sidewall of the first frame.

6. The LIDAR device of claim 5,
wherein a lower end of the extension piece of the shielding cover is disposed at a position equal to or lower than a center of a bearing of the first bearing member.

7. The LIDAR device according to any one of claims 1 to 4, comprising:
a central shaft coupled to a central inner portion of the first frame;
one or more second bearing members around the central shaft; and
a wireless power transmission module coupled inside the first and second frames.

8. A LIDAR device comprising:
a bottom cover;
a first frame having a plurality of fixed sidewalls protruding in a vertical direction therein and disposed on an upper circumference of the bottom cover;
a central shaft coupled to the first frame;
a second frame rotating around the central shaft;
a motor coupled to the first frame and the second frame and configured to rotate the second frame;
a wireless power transmission module respectively coupled to the first frame and the second frame;
a first bearing member coupled between the second frame and the first frame and configured to guide rotation;
a second bearing member coupled between the central shaft and the second frame and configured to guide rotation; and
a shielding cover disposed between the motor and the first bearing member,
wherein a portion of the motor is disposed inward of a gap between the first frame and the second frame and is disposed higher than a position of the gap between the outermost first and second frames.

9. The LIDAR device of claim 8,
wherein the motor includes a yoke disposed inside an outer wall of the first frame, a plurality of driving magnets disposed inside the yoke, and a motor core facing the plurality of driving magnets and fixed to an inner sidewall of the second frame, and
wherein an upper end of the yoke is disposed higher than a position of the gap between an outermost first frame and the second frame.

10. The LIDAR device of claim 9,
wherein the first frame includes a plurality of discharge outlets each having a flow path penetrating outward from an accommodating space between an inner sidewall and an outer wall of the first frame.

11. The LIDAR device of claim 9,
wherein the shielding cover includes a fixed piece covering a lower surface of the motor core, a bent piece bent from the fixed piece, and an extension piece bent from an end of the bent piece toward an outer side of an inner sidewall of the first frame.

12. The LIDAR device of claim 11,
wherein a lower end of the extension piece of the shielding cover is disposed at a position equal to or lower than a center of a bearing of the first bearing member.
